**Europäisches Patentamt**

**European Patent Office**

**Office européen des brevets**

(19)

(11) Veröffentlichungsnummer: **0 118 133**
**B1**

(12) **EUROPÄISCHE PATENTSCHRIFT**

(45) Veröffentlichungstag der Patentschrift:
**17.09.86**

(21) Anmeldenummer: **84102534.9**

(22) Anmeldetag: **18.06.80**

(60) Veröffentlichungsnummer der früheren Anmeldung
nach Art. 76 EPÜ: **0022195**

(51) Int. Cl.⁴: **C 03 C 3/16,** C 03 C 3/062,
B 41 J 3/04, C 03 C 4/20

(54) **Gegen saure Tinten beständige Mehrfachdüsenanordnung für Tintenstrahldrucker.**

(30) Priorität: **28.06.79 US 53147**

(43) Veröffentlichungstag der Anmeldung:
**12.09.84 Patentblatt 84/37**

(45) Bekanntmachung des Hinweises auf die Patenterteilung:
**17.09.86 Patentblatt 86/38**

(84) Benannte Vertragsstaaten:
**DE FR GB**

(56) Entgegenhaltungen:
**DE - A - 2 144 106**
**US - A - 4 110 245**
**US - A - 4 122 460**

**CHEMICAL ABSTRACTS, Band 86, 1977, Seite 290, Nr.**
**160006k, Columbus, Ohio, USA**

(73) Patentinhaber: **International Business Machines**
**Corporation, Old Orchard Road, Armonk, N.Y. 10504 (US)**

(72) Erfinder: **Powell, Jimmie Lee, 33 Tor Road, Wappingers**
**Falls New York 12590 (US)**
Erfinder: **Tummala, Rao Ramamahara, 13 Shady Lane,**
**Hopewell Junction New York 12533 (US)**

(74) Vertreter: **Kreidler, Eva-Maria, Dr. rer. nat., Schönaicher**
**Strasse 220, D-7030 Böblingen (DE)**

## Beschreibung

Die Erfindung betrifft eine gegen saure Tinten beständige Mehrfachdüsenanordnung für Tintenstrahldrucker, bei der eine Anzahl von aus Glas bestehenden Düsen in eine Glasmasse eingebettet ist.

Aus DE-C 2654157 und DE-A 2833144 sind Mehrfachdüsenanordnungen bekannt. Eine Mehrfachdüsenanordnung ist auch Gegenstand der vorliegenden Patentanmeldung. In den zuvorgenannten Schriften ist der Stand der Technik auf dem Gebiet der Tintenstrahldrucker ausführlich abgehandelt.

In Tintenstrahldruckern und/oder -schreibern wird die flüssige Tinte unter Druck einer Düse oder Düsen zugeführt, durch die ein extrem dünner, kontinuierlicher Tintenstrahl austritt. In Druckern dieser Art werden im allgemeinen aus Glas hergestellte Düsen verwendet.

Weil die Tinten, die in Tintenstrahldruckern verwendet werden, sauer (pH 6,25) reagieren können, muss das Glas, aus dem die Düsen bestehen und die entsprechenden abdichtenden Gläser, die zur Einbettung der Düsen verwendet werden, korrosionsbeständig sein. Es wurde auch gefunden, dass das einwandfreie Funktionieren von Druckern dieser Art sehr stark von der Art und Weise abhängt, in der die Düsen im Hinblick auf die sie umgebende Oberfläche in ein abdichtendes oder Lötglas eingekapselt oder eingebettet werden. Der Bereich in der Umgebung der Düsen darf keine Hohlräume und Blasen enthalten, um ein Aussickern oder Zerbrechen der Düse zu vermeiden, wenn diese in Form dünner Plättchen korrodierend wirkenden Tinten unter Druck ausgesetzt wird. Zusätzlich müssen zur Vermeidung einer übermässigen Beanspruchung und/oder des Zerbrechens irgendwelcher Elemente, insbesondere, wenn diese zur Verwendung in Tintenstrahldruckern in dünne Scheiben geschnitten, geschliffen und poliert werden, die thermischen Eigenschaften und die Ausdehnungscharakteristik der verwendeten Elemente genau berücksichtigt werden. Darüber hinaus muss die Einbettung oder Einkapselung so durchgeführt werden, dass die Düsengrösse, die Form oder Ausrichtung nicht verändert wird.

In der DE-C 2654157 und in der DE-A 2833144 ist die Herstellung von Mehrfach-Tintenstrahl-Düsenanordnungen beschrieben und beansprucht, bei welcher aus keramischem Material oder Glas bestehende Blöcke zur Bildung von zwei Platten, vorzugsweise in Rechteckform, mit der erforderlichen Oberflächengüte und den gewünschten Abmessungen maschinell bearbeitet werden. Über die Länge einer Seite der ersten Platte wird eine einzige Nut hergestellt, und über die Breite der gleichen Seite und die Nut schneidend werden quer dazu verlaufende Kreuzschlitze, die tiefer als die Nut sind, hergestellt. Den Kreuzschlitzen in der ersten Platte entsprechende Schlitze werden über die Breite einer Seite der zweiten Platte hergestellt. Die Nut hält eine Anzahl von Glasröhrchen, die vor oder nach dem Zusammenfügen der beiden Platten eingebracht werden können. In jedem Schlitz ist ein Dichtungsmaterial, wie z.B. eine Glasfaser oder ein Glasfaden enthalten, das, nachdem die beiden Platten miteinander verbunden sind, eingebracht wird.

Die miteinander verbundenen Platten mit den Röhrchen und den Glasdichtungsfäden werden dann in aufrechter Stellung auf einem Träger unter Federvorspannung zusammengeklammert, und dann wird die gesamte Anordnung einer Temperatur ausgesetzt, die nur zum Schmelzen der Glasfäden ausreicht, die dann durch die Kapillarwirkung und die Schwerkraft durch die Nut fliessen und damit eine vollständige Abdichtung der Röhrchen, insbesondere in dem Bereich der Kreuzschlitze herstellen. Nach Beendigung der Abdichtung werden die miteinander verbundenen Platten allmählich abgekühlt, und dann wird der Bereich zwischen den Schlitzen in dünne Düsenplättchen zerschnitten. Die Kreutschlitze stellen sicher, dass die einzelnen, scheibenförmigen Abschnitte gleichförmig ausgefüllt sind, dass die Strecke, die das zur Dichtung verwendete Glas in Längsrichtung fliesst und die Fläche der Sektionsschnitte verringert werden. Ausserdem dienen die Kreuzschlitze zur Entlüftung und vermeiden damit den Lufteinschluss und Hohlräume. Sie können auch zum Einbringen eines Kühlmittels so nah als möglich an das Schneidwerkzeug und die Düsenscheiben verwendet werden. Nachdem eine Seite des geschnittenen Plättchens geläppt und poliert ist, kann es auf einer Stützplatte oder einer Trägerplatte unter Verwendung üblicher Verfahren, wie Verkleben mit Epoxidharz, Glasdichtungen oder durch Löten angebracht werden. Nach der Befestigung wird auch die Vorderseite des Plättchens geläppt und poliert. Das so auf der Trägerplatte befestigte Plättchen kann nunmehr an eine Quelle für eine unter hohem Druck stehende Flüssigkeit angeschlossen werden.

In der zuvor angegebenen DE-A 2833144 werden Tintenstrahl-Kapillardüsen mit verbesserten thermischen Ausdehnungskoeffizienten und Glühtemperaturen beschrieben, die hergestellt werden aus einer Glaszusammensetzung mit einem Gehalt, in Gew.-%, an etwa 40 bis 60% $SiO_2$, 12 bis 20% $ZrO_2$, 12 bis 17% $Na_2O$, 0 bis 2,3% $K_2O$ und 0 bis 6% $MgO$.

Diese Grundzusammensetzung des Glases kann dahingehend modifiziert werden, dass eine verbesserte Beständigkeit gegenüber sauren Tinten erhalten wird, indem $As_2O_3$, $CaO$ und $Al_2O_3$ zugefügt werden unter Erhalt einer Glaszusammensetzung mit einem Gehalt, in Gew.-%, an 35 bis 58,5% $SiO_2$, 17 bis 22,5% $ZrO_2$, 16 bis 17% $Na_2O$, 2 bis 3% $K_2O$, 3 bis 5% $MgO$, 0 bis 1% $Al_2O_3$, 0 bis 2,5% $CaO$, 0,5% $As_2O_3$.

Aufgabe der vorliegenden Erfindung ist die Bereitstellung eines Glases zur Abdichtung oder Einkapselung von Düsen für Tintenstrahldrucker aus den zuvor beschriebenen Glaszusammensetzungen, das gegenüber schwach sauren Tinten, die zum Tintenstrahldrucken verwendet werden, chemisch stabil ist; das die für den Einbau von Tintenstrahldüsen zu einer gewünschten Anordnung entsprechenden thermischen Eigenschaften aufweist und dessen thermischer Ausdehnungskoeffizient denen des Düsenglases angepasst ist.

Die Aufgabe der Erfindung wird gelöst durch eine Mehrfachdüsenanordnung der eingangs genannten Art, die dadurch gekennzeichnet ist, dass die für die Einbettung der Düsen verwendete Glasmasse folgende Oxide, in Gew.-%, enthält:

| | | | |
|---|---|---|---|
| $P_2O_5$ | 15 - 70,0% | $Na_2O$ | 0 - 4,0% |
| $ZnO$ | 14,0 - 66,4% | $SiO_2$ | 0 - 5,0% |
| $B_2O_3$ | 0 - 18,3% | $ZrO_2$ | 0 - 2 % |
| $Al_2O_3$ | 7 - 8 % | $TiO_2$ | 0 - 1 % |

Die Glasmasse gemäss der Erfindung weist die zuvor verlangten Eigenschaften auf und erfüllt ausserdem die Bedingungen, die an ein Glas zum Einbau von Tintenstrahldüsen in einen Tintenstrahldrucker gestellt werden und die nachfolgend noch einmal zusammengestellt sind.

Das Glas zum Abdichten oder Vereinigen von Glasdüsen in einer Tintenstrahl-Druckvorrichtung muss eine Ausdehnung vergleichbar mit der des Düsenglases bei dem Erstarrungspunkt des abdichtenden Glases haben und muss bei einer Temperatur, die bei oder unter der Glühtemperatur (Ta) der Düsenglaszusammensetzung liegt, fliessen. Wenn während des Abdichtens der Ta-Wert des Düsenglases wesentlich überschritten wird, deformieren sich die Düsen und werden unbrauchbar.

Im allgemeinen muss ein Glas zur Verwendung als Einbettungs- oder Einkapselungsmaterial für Tintenstrahl-Druckdüsen drei wesentliche Kriterien erfüllen. Erstens muss das Glas chemisch beständig gegenüber schwach sauren Tinten, die zum Strahldrucken verwendet werden, sein. Zweitens muss das Glas thermische Eigenschaften aufweisen, die seine Verwendung zum Einbau oder zur Einkapselung von Glasdüsen zu der gewünschten Anordnung gestatten. Beispielsweise müssen die Gläser, die zum Abdichten verwendet werden, eine Erweichungstemperatur aufweisen, die deutlich unter der Deformationstemperatur jener Oberfläche liegt, auf die sie angewendet werden, so dass das abdichtende Glas fliessen kann und diese Oberfläche bei einer Temperatur unterhalb derjenigen, bei der diese deformiert wird, benetzt. Auch müssen diese Gläser den bekannten Regeln der Anpassung thermischer Koeffizienten (beispielsweise des Ausdehnungskoeffizienten) folgen, damit das Eintreten thermischer Spannungen beim Abkühlen verhindert oder auf ein Minimum herabgesetzt wird.

Es wird allgemein angenommen, dass einer allgemeinen Regel entsprechend der thermische Ausdehnungskoeffizient eines abdichtenden Glases in dem Masse zunimmt, wie die Abdichtungs- oder Erweichungstemperatur (Ts) des Glases abnimmt. Demzufolge haben die meisten weichen Gläser, die bei relativ niedrigen Temperaturen zu fliessen beginnen (beispielsweise 400°C), Koeffizienten grösser $94 \times 10^{-7}/°C$. Diese Ausdehnungskoeffizienten sind zu hoch für einen zufriedenstellenden Einbau der Glasdüsen, die derzeit für Tintenstrahldrucker vorgesehen sind. Im allgemeinen ist für abdichtende Gläser ein Expansionskoeffizient ($\alpha$ bei 24 bis 300°C) von 54,6 bis $88,6 \times 10^{-7}/°C$, eine Glühtemperatur (Ta) von 415 bis 503°C und eine Erweichungstemperatur (Ts) von 484 bis 594°C erwünscht. Optimale Gläser für Abdichtungszwecke sollten folgende thermische Eigenschaften aufweisen: einen $\alpha$-Wert von $78 \pm 3 \times 10^{-7}/°C$, Werte für Ts von $550 \pm 30°C$ und für Ta von $450 \pm 30°C$. Schliesslich müssen die Gläser für Abdichtungszwecke glasartiger Natur sein, so dass sie leicht zu Fasern, Stäben oder Röhrchen verarbeitet werden können.

Die Erfindung wird anhand von Ausführungsbeispielen in Verbindung mit den beigefügten Zeichnungen im einzelnen beschrieben.

In der Zeichnungen zeigt:
Fig. 1 eine Plattenanordnung bei der Herstellung einer Vielfach-Tintenstrahl-Düsenanordnung zur Erläuterung dieser Erfindung;
Fig. 2 eine Querschnittsansicht längs der Linie 2-2 der Fig. 1;
Fig. 3 eine weitere Verfahrensstufe bei der Herstellung einer Anzahl von Plättchen, die eine Mehrfach-Tintenstrahl-Düsenanordnung enthalten;
Fig. 4 ein Plättchen mit einer Mehrfach-Tintenstrahl-Düsenanordnung auf einer Trägerplatte für einen Tintenstrahldrucker;
Fig. 5 eine Querschnittsansicht längs der Linie 5-5 von Fig. 4.

Es wurde gefunden, dass bleireiche Bortrioxidgläser, die zum Abdichten verwendet werden und im Handel für die Herstellung von Glasdüsenanordnungen für Tintenstrahldrucker erhältlich sind, eine sehr niedrige Korrosionsbeständigkeit gegenüber den sauren Tintenlösungen aufweisen, die für Hochgeschwindigkeits-Druckverfahren, insbesondere in Verbindung mit den Düsenglaszusammensetzungen, die in der DE-A 28 33 144 beschrieben sind, verwendet werden. Diese im Handel erhältlichen Gläser für Abdichtungszwecke zersetzen sich in sauren Tintenlösungen, wenn sie diesen für eine relativ kurze Zeit (etwa 24 Stunden bei 60°C) ausgesetzt werden.

Es wurde gefunden, dass eine Passivierung der wieder aufgeschmolzenen Oberflächen der im Handel erhältlichen Gläser für Abdichtungszwecke mit dünnen Filmen aus $TiO_2$, $SiO_2$, $ZrO_2$ und Gold für das Glas nur einen unzureichenden Schutz gegen korrodierend wirkende Tinten darstellt, in erster Linie, weil die Materialien nicht vollständig ohne kleine Öffnungen abgeschieden werden können. Die Tinte sickert durch diese Öffnungen und zersetzt das Glas. Dadurch werden Teilchen des chemisch instabilen Glases erhalten, welche die ständig zirkulierenden Tinten des Druckers bei ihrem Eintritt und Austritt aus den Öffnungen der Tintenstrahldüsen verunreinigen, d.h. das wieder aufgeschmolzene Glas für Abdichtungszwecke wird an diesen Stellen abgeschieden. Der Grad der Verunreinigung nimmt in dem Masse zu, wie die Erosion des Glases durch die Tinten fortschreitet. Es kann eintreten, dass die Düsen in der Strahlanordnung mit den Rückständen des abdichtenden Glases verstopft werden und aufhören, einwandfrei zu funktionieren. Im Hinblick auf diese schwerwiegenden Probleme sind bleireiche Bortrioxidgläser ungeeignet als abdichtendes Glas für Vielfach-Glasdüsenanordnungen, insbesondere bei Langzeitanwendungen.

In dieser Erfindung werden Glaszusammensetzungen für Abdichtungszwecke beschrieben, die eine hohe chemische Widerstandsfähigkeit und relativ niedrige Erweichungstemperaturen, Glühtemperaturen und passende Expansionskoeffizienten für Tintenstrahl-Düsenanordnungen aufweisen. Diese Gläser für Abdichtungszwecke sind nicht nur einmalig im Hinblick auf ihre hohe chemische Korrosionswiderstandsfähigkeit, sie weisen auch thermische Eigenschaften auf, die sie zum Abdichten oder Einbetten von Glasdüsen zu stabilen Anordnungen geeignet machen. Die chemischen Zusammensetzungen der Gläser für Abdichtungszwecke ergeben säurebeständige Gläser, wie nachfolgend näher erläutert wird.

Bleiboratgläser für Abdichtungszwecke mit relativ niedrigen thermischen Eigenschaften (Ts, Ta und $\alpha$) sind nicht schwierig herzustellen, aber es ist schwierig, wenn nicht unmöglich, der Zusammensetzung dieser Glasmassen gute Korrosionsbeständigkeit gegen saure Tinten zu verleihen, ohne im wesentlichen ihre thermischen Wiederaufschmelzeigenschaften zu erhöhen. Daher wurden verschiedene Gläser entwickelt, welche eine wesentlich verbesserte Widerstandsfähigkeit gegenüber korrodierenden Angriff durch saure Tintenlösungen (pH-Wert 6,25) aufweisen.

In Tabelle I werden die Zusammensetzung, die thermischen Eigenschaften und Widerstandsfähigkeit gegenüber Tinten der neuen Gläser im Vergleich zu den entsprechenden Eigenschaften des Bleiboratglases C-223 gezeigt. Die Tabelle zeigt, dass die meisten Gläser Erweichungstemperaturen, Glühtemperaturen und Ausdehnungskoeffizienten aufweisen, die etwas grösser als die Werte des C-223-Glases sind. Es wurde jedoch gefunden, dass dies kein Problem bei der Herstellung der Abdichtungsglas/Düsenglasstruktur darstellt. In der Praxis wurde bei Wiederaufschmelzversuchen gefunden, dass die Viskosität der neuen Gläser bei 700 °C gleich gut oder besser ist als diejenige des Bleiboratglases C-223. Diese niedrige Viskosität ist direkt auf den hohen $P_2O_5$-Gehalt in der Glaszusammensetzung zurückzuführen.

*Tabelle I*

Thermische Eigenschaften, Zusammensetzungen und Widerstandsfähigkeit gegenüber Tinten der neuen «S»-Gläser und des C-223-Glases.

| Oxid Gew.-% | C-223 | S-347 | S-319 | S-289 |
|---|---|---|---|---|
| $P_2O_5$ | — | 69,5 | 69,5 | 70,0 |
| PbO | 58,0 | — | — | — |
| $SiO_2$ | 10,0 | 2,5 | 4,0 | 5,0 |
| $B_2O_3$ | 19,5 | — | — | — |
| $ZrO_2$ | — | 2,0 | 0,5 | — |
| ZnO | 4,0 | 14,0 | 14,0 | 14,0 |
| $Na_2O$ | — | 4,0 | 4,0 | 3,0 |
| $Al_2O_3$ | 4,0 | 7,0 | 7,5 | 8,0 |
| $TiO_2$ | — | 1,0 | 0,5 | — |
| MgO | 2,5 | — | — | — |
| CuO | 2,0 | — | — | — |
| $\alpha \times 10^{-7}/°C$ (24-300 °C) | 69,0 | 74,9 | 83,0 | 77,8 |
| Ts (°C) | 522 | 578 | 563 | 572 |
| Ta (°C) | 434 | 457 | 439 | 448 |
| Gew. Verlust (mg/cm²)* in einer sauren Tinte von pH 6,25 | 15,2 | 0,185 | 0,279 | 0,414 |

\* Alle Gläser wurden etwa 24 Stunden lang der Tinte ausgesetzt, und der Grad der Korrosion wurde während des Tests dadurch beschleunigt, dass die Tintentemperatur von 25 auf 60 °C erhöht wurde. Durch die Verwendung von kleinen Glasstäben wurde die Oberfläche, welche der Tinte ausgesetzt wurde, wesentlich vergrössert. Diese Stäbe weisen einen Durchmesser von 1,0668 mm auf. Ein 24-Stundentest dieser Art entsprach einem 300-Stundentest, durchgeführt an der gleichen Glasmenge, die jedoch als eine Masse vorlag.

Wie ersichtlich ist, ist in Tabelle I auch die chemische Beständigkeit verschiedener Gläser gegenüber einer leicht sauren elektrostatischen Tinte (pH = 6,25) angegeben. Alle diese entwickelten, abdichtenden Gläser zeigen Gewichtsverluste, die viel niedriger sind als der des C-223-Glases.

Es hat sich gezeigt, dass das abdichtende Glas mit der Bezeichnung S-347 das beste Glas für die Herstellung strukturell einwandfreier, hochsäurebeständiger Düsenanordnungen ist, weil dieses Glas im Hinblick auf den Expansionskoeffizienten thermisch mit dem Düsenglas A-192* aus der DE-A 28 33 144 verträglich ist, und weil es gegenüber sauren Tintenlösungen eine sehr hohe Korrosionsbeständigkeit aufweist. Das S-347-Glas hat in Kombination den niedrigsten Wert für Ts und $\alpha$ und den höchsten für Ta und die Säurekorrosionsbeständigkeit, verglichen mit bisher bekannten abdichtenden Gläsern. Der Gewichtsverlust des S-347-Glases in der sauren Tintenlösung ist 82 mal geringer als der des C-223-Glases und nur 30 mal höher als der des A-192-Düsenglases.

\* Zusammensetzung A-192, Gew.-%

| | | | |
|---|---|---|---|
| $SiO_2$ | 58,5 | MgO | 4,0 |
| $ZrO_2$ | 19,0 | $K_2O$ | 2,0 |
| $Na_2O$ | 16,0 | $As_2O_3$ | 0,5 |
| Ts °C | 863 | Ta °C | 673 |

Ein Glas, wie dasjenige vom Typ S-347, d.h. im wesentlichen ein $P_2O_5$-zinkoxidhaltiges Glas mit geringen Zusätzen von $ZrO_2$, $Al_2O_3$, $TiO_2$, $SiO_2$ und/oder $Na_2O$ zur Verbesserung der Säurebeständigkeit ist besser geeignet zur Herstellung von Glasdüsenanordnungen hoher Säurebeständigkeit für das Tintenstrahldrucken als jedes andere abdichtende Glas, das derzeit bekannt ist.

Zusammenfassend kann gesagt werden, dass in der DE-A 28 33 144 ausgezeichnet korrosionsbeständige Gläser (beispielsweise A-192, siehe Tabelle III und Fig. 9 dieser Offenlegungsschrift) beschrieben sind, welche durch die abdichtenden Gläser gemäss dieser Erfindung ergänzt werden und die untereinander verträglich sind und sich zur Herstellung von Düsenanordnungen für das Tintenstrahldrucken eignen. Diese abdichtenden Gläser können zusätzlich zu ihren thermischen Eigenschaften um das Düsenglas herum aufgeschmolzen werden und ergeben eine Düsenanordnung für das Tintenstrahldrucken mit niedrigen Spannungen. Ihre chemische Widerstandsfähigkeit ist etwa 75 mal besser als die bisher verfügbarer bleireicher Bortrioxidgläser.

*Beschreibung der bevorzugten Ausführungsform*

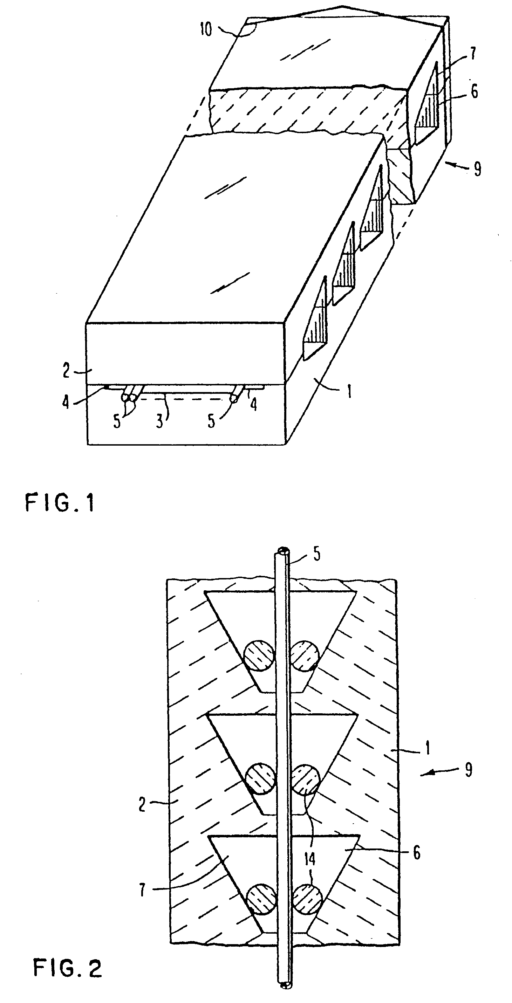

In Fig. 1 ist eine Plattenanordnung für die Herstellung von Vielfach-Düsenanordnungen gezeigt. Die Platten 1 und 2, die vorzugsweise aus dem gleichen Material bestehen (A-192-Glas oder keramisches Material) und von gleicher Oberflächenbeschaffenheit sind, werden maschinell in der Weise bearbeitet, dass auf einer Oberfläche parallele, tief eingeschnittene trapezförmige Schlitze 6 und 7 gebildet werden. In der Platte 1 werden ferner eine einzige breite Nut 3 und schmalere Nuten 4 hergestellt. Die Nut 3 muss so breit sein, dass eine Vielzahl von Kapillarglas-Düsenelementen oder Röhrchen 5 bündig nebeneinander über die gesamte Länge der Nutoberfläche gelegt werden können. Die Nut 3 kann auch an den Ecken leicht abgeschrägt sein oder an den Innenkanten unterschnitten sein. Die kleineren Nuten 4 müssen lediglich so geformt sein, dass zwischen den Platten ein erstes Glas zur Abdichtung fliessen kann und dabei eine sichere Verbindung zwischen den Platten 1 und 2 herstellt. Die Nuten 8 dienen der Ausrichtung beim Zusammenfügen der Platten.

Fig. 1 zeigt die zu einer Plattenanordnung 9 zusammengefügten Platten 1 und 2. Man sieht, dass die Schlitze 6 und 7 durch einen in die Nut 8 eingelegten Draht 10 genau ausgerichtet sind. Der Draht besteht aus hitzebeständigem Material, wie z.B. Wolfram. Eine derartige Ausrichtung ist erforderlich, da der Bereich zwischen jedem benachbarten Paar von Schlitzen später zur Herstellung von Vielfach-Düsenplättchen herausgeschnitten wird. Zu diesem Zeitpunkt werden die Platten zwar zusammengefügt, aber noch nicht mit einer Dichtung versehen, und die Kapillarglasröhrchen 5 (aus A-192-Glas) liegen lose in der Nut 3.

Fig. 2 zeigt eine Plattenanordnung 9 in senkrechter Lage, wodurch der Schmelzfluss einer ersten Glasdichtung oder der Glasfaser 14 (d.h. S-347-Glas für saure Tintenanwendung) nach unten gestattet wird, wenn Anordnung und Unterlage in einen Ofen gebracht und erhitzt werden. Aus der Zeichnung ist ersichtlich, dass sich die Glasröhren über den unteren Teil der Vorrichtung hinaus erstrecken, um eine mögliche Verstopfung der Düsen zu verhindern, die durch eine Schmelze, welche aufgrund der Kapillarwirkung in den Röhren hochsteigt, verursacht wird.

Fig. 2 zeigt auch eine Teilschnittansicht längs der Linie 2-2 der in Fig. 1 gezeigten Anordnung 9. Man sieht dass wegen der Trapezform der Schlitze zu beiden Seiten des Glasröhrchens 5 die Glasdichtung oder die Glasfaser 14 zu beiden Seiten dicht an dem Glasröhrchen anliegt und daher beim Schmelzen (bei etwa 700 bis 750°C) wegen der Kapillarwirkung und der Schwerkraft frei nach unten fliesst, so dass der Glasbereich zwischen jedem obenliegenden Schlitz und jedem darunterliegenden Schlitz ohne Hohlräume und Blasen abgedichtet wird.

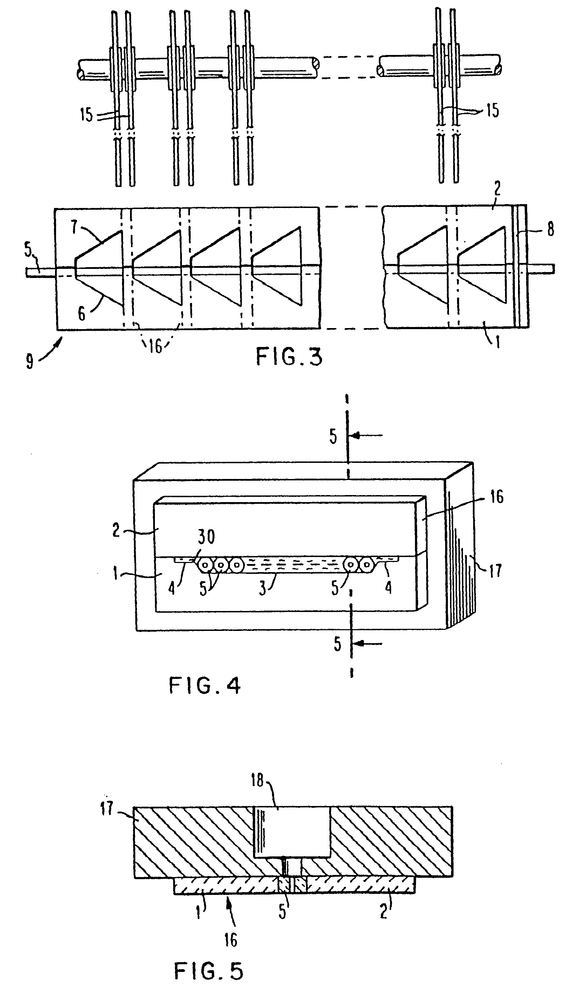

Fig. 3 zeigt eine Möglichkeit auf, wie die Plattenanordnung 9 nach der Abdichtung zerteilt werden kann, wobei eine Anzahl gleichförmiger Abstände voneinander aufweisender Sägeblätter 15 relativ zur Plattenanordnung 9 bewegt werden. Die Anordnung 9, die in einer Aufspannvorrichtung einer Gattersägmaschine befestigt ist, wird zum Zerschneiden oder Zersägen parallel zur Ebene der Sägeblätter zugeführt. Hier sind zwar rotierende Kreissägen gezeigt, es können jedoch auch in gleicher Weise hin- und hergehende Sägeblätter eingesetzt werden. Selbstverständlich können die Scheiben auch einzeln gesägt werden, doch wird hier ein gleichzeitiges Sägen der Scheiben 16 mit einer Gattersäge bevorzugt, da sich dadurch eine gleichmässige Dicke über die gesamte Länge der Scheibe ergibt. In der hier offenbarten Anordnung, die ein Teil der Erfindung ist, wird durch die quer verlaufenden Schlitze 6 und 7 die von der Säge zu durchtrennende Fläche verringert, während man gleichzeitig durch diese Schlitze 6 und 7 ein Kühlmittel so nahe wie möglich an die Sägeblätter oder Kreissägen und die Glasröhrchen heranführen kann. Dadurch kann man die Anordnung 9 zersägen, ohne dabei das Glasröhrchen oder die Glasdichtung zu beschädigen.

Fig. 4 zeigt eine typische Scheibe 16 mit der Glasschmelze oder -dichtung 30 in den Nuten 3 und 4, wodurch die Röhrchen völlig abgedichtet und fest zwischen den Platten angeordnet sind. Nach Abschneiden einer Scheibe wird deren Oberfläche mit höchster Genauigkeit geläppt und poliert, beispielsweise mit einer Vorrichtung, die im IBM Technical Bulletin, Dezember 1974, Band 17, Nr. 7, S. 2171 beschrieben ist. Nachdem eine Seite der Scheibe 16 in geeigneter Weise geläppt und poliert ist, wird sie, wie in Fig. 5 gezeigt ist, auf einer Stützplatte 17 befestigt und bildet damit den Kopf eines Tintenstrahldruckers. Die Stützplatte sollte dabei vorzugsweise aus dem gleichen Material bestehen wie die Scheibe, d.h. aus keramischem Material oder Glas, obgleich dies nicht zwingend vorgeschrieben ist. Die Befestigung kann durch Aufbringen eines dünnen Überzugs, eines Glaslötmittels oder eines Epoxidharzes auf mindestens dem Teil der Stützplatte durchgeführt werden, der die gleichen Abmessungen wie die Scheibe aufweist und rund um die Bohrung herum. Die auf der Stützplatte ordentlich ausgerichtete Scheibe wird dann erhitzt, wodurch das Glaslötmittel oder das Epoxidharz geschmolzen wird, das nach der Abkühlung die Scheibe fest mit der Stützplatte verbindet. Anschliessend wird die Vorderseite der Scheibe geläppt und poliert.

Fig. 5 zeigt eine Teilschnittansicht der befestigten Scheibe 16 längs der Linie 5-5 in Fig. 4 bei richtiger Ausrichtung des Glasröhrchens 5 und der Bohrung 18 der Stützplatte 17. Die Bohrung in der Stützplatte im Anschluss an die Scheibe ist grösser als die Bohrung des Glasröhrchens, jedoch kleiner als der Kreisdurchmesser des Röhrchens, so dass eine flüssigkeitsdichte Abdichtung erreicht wird und bei Zufuhr einer unter Druck stehenden Flüssigkeit zu der Platte kein Lecken der Flüssigkeit um das Röhrchen herum auftritt.

**Patentansprüche**

1. Gegen saure Tinten beständige Mehrfachdüsenanordnung für Tintenstrahldrucker, bei der eine Anzahl von aus Glas bestehenden Düsen in eine Glasmasse eingebettet ist, dadurch gekennzeichnet, dass die für die Einbettung der Düsen verwendete Glasmasse folgende Oxide, in Gew.-%, enthält:

| | | | |
|---|---|---|---|
| $P_2O_5$ | 15 - 70,0% | $Na_2O$ | 0 - 4,0% |
| ZnO | 14,0 - 66,4% | $SiO_2$ | 0 - 5,0% |
| $B_2O_3$ | 0 - 18,3% | $ZrO_2$ | 0 - 2 % |
| $Al_2O_3$ | 7 - 8 % | $TiO_2$ | 0 - 1 %. |

2. Mehrfachdüsenanordnung nach Anspruch 1, dadurch gekennzeichnet, dass die für die Einbettung der Düsen verwendete Glasmasse folgende Oxide, in Gew.-%, enthält:

| | | | |
|---|---|---|---|
| $P_2O_5$ | 69,5% | $Na_2O$ | 4% |
| $SiO_2$ | 2,5% | $Al_2O_3$ | 7% |
| $ZrO_2$ | 2 % | $TiO_2$ | 1% |
| ZnO | 14 %. | | |

3. Mehrfachdüsenanordnung nach Anspruch 1, dadurch gekennzeichnet, dass die für die Düsen verwendete Glasmasse folgende Oxide, in Gew.-%, enthält:

| | | | |
|---|---|---|---|
| $SiO_2$ | 35,0 - 58,5% | $Al_2O_3$ | 0 - 1,0% |
| $ZrO_2$ | 17,0 - 22,5% | CaO | 0 - 2,5% |
| $NaO_2$ | 16,0 - 17,0% | $K_2O$ | 2,0 - 3,0% |
| MgO | 3,0 - 5,0% | $As_2O_3$ | 0,5%. |

4. Mehrfachdüsenanordnung nach Anspruch 3, dadurch gekennzeichnet, dass die für die Düsen verwendete Glasmasse folgende Oxide, in Gew.-%, enthält:

| | | | |
|---|---|---|---|
| $SiO_2$ | 58,5% | MgO | 4 % |
| $ZrO_2$ | 19 % | $K_2O$ | 2 % |
| $Na_2O$ | 16 % | $As_2O_3$ | 0,5%. |

5. Mehrfachdüsenanordnung nach Anspruch 4, dadurch gekennzeichnet, dass sie Glasdüsen aus einer Zusammensetzung gemäss Anspruch 4, eingebettet in eine gegen saure Tinten beständige Glasmasse der Zusammensetzung gemäss den Ansprüchen 1 und 2 enthält.

**Claims**

1. Acidic ink-resistant multi-nozzle array for ink jet printers, where a number of glass nozzles are embedded in a glass substance, characterized in that the glass mass used for embedding the nozzles comprises the following oxides, by weight %:

| | | | |
|---|---|---|---|
| $P_2O_5$ | 15 - 70,0% | $Na_2O$ | 0 - 4,0% |
| ZnO | 14,0 - 66,4% | $SiO_2$ | 0 - 5,0% |
| $B_2O_3$ | 0 - 18,3% | $ZrO_2$ | 0 - 2 % |
| $Al_2O_3$ | 7 - 8 % | $TiO_2$ | 0 - 1 %. |

2. Multi-nozzle array as claimed in claim 1, characterized in that the glass mass used for embedding the nozzles comprises the following oxides, by weight %:

| | | | |
|---|---|---|---|
| $P_2O_5$ | 69,5% | $Na_2O$ | 4% |
| $SiO_2$ | 2,5% | $Al_2O_3$ | 7% |
| $ZrO_2$ | 2 % | $TiO_2$ | 1% |
| ZnO | 14 %. | | |

3. Multi-nozzle array as claimed in claim 1, characterized in that the glass mass used for the nozzles comprises the following oxides, by weight %:

4. Multi-nozzle array as claimed in claim 3, characterized in that the glass mass used for the nozzles comprises the following oxides, by weight %:

| | | | |
|---|---|---|---|
| $SiO_2$ | 58,5% | MgO | 4 % |
| $ZrO_2$ | 19 % | $K_2O$ | 2 % |
| $Na_2O$ | 16 % | $As_2O_3$ | 0,5%. |

5. Multi-nozzle array as claimed in claim 4, characterized in that it comprises glass nozzles in a composition in accordance with claim 4, embedded in an acidic ink resistant glass mass of the composition in accordance with claims 1 and 2.

**Revendications**

1. Dispositif à buses multiples résistant à l'égard des encres acides, pour imprimante à jet d'encre, dans lequel un certain nombre de buses constituées de verre sont encastrées dans une masse de verre, caractérisé en ce que la masse de verre employée pour l'encastrement des buses contient les oxydes suivants, en % en poids:

| | | | |
|---|---|---|---|
| $P_2O_5$ | 15 - 70,0% | $Na_2O$ | 0 - 4,0% |
| ZnO | 14,0 - 66,4% | $SiO_2$ | 0 - 5,0% |
| $B_2O_3$ | 0 - 18,3% | $ZrO_2$ | 0 - 2 % |
| $Al_2O_3$ | 7 - 8 % | $TiO_2$ | 0 - 1 %. |

2. Dispositif à buses multiples selon la revendication 1, caractérisé en ce que la masse de verre employée pour l'encastrement des buses contient les oxydes suivants, en % en poids:

| | | | |
|---|---|---|---|
| $P_2O_5$ | 69,5% | $Na_2O$ | 4% |
| $SiO_2$ | 2,5% | $Al_2O_3$ | 7% |
| $ZrO_2$ | 2 % | $TiO_2$ | 1% |
| ZnO | 14 %. | | |

3. Dispositif à buses multiples selon la revendication 1, caractérisé en ce que la masse de verre employée pour les buses contient les oxydes suivants en % en poids:

| | | | |
|---|---|---|---|
| $SiO_2$ | 35,0 - 58,5% | $Al_2O_3$ | 0 - 1,0% |
| $ZrO_2$ | 17,0 - 22,5% | CaO | 0 - 2,5% |
| $NaO_2$ | 16,0 - 17,0% | $K_2O$ | 2,0 - 3,0% |
| MgO | 3,0 - 5,0% | $As_2O_3$ | 0,5%. |

4. Dispositif à buses multiples selon la revendication 3, caractérisé en ce que la masse de verre employée pour les buses contient les oxydes suivants, en % en poids:

| | | | |
|---|---|---|---|
| $SiO_2$ | 58,5% | MgO | 4 % |
| $ZrO_2$ | 19 % | $K_2O$ | 2 % |
| $Na_2O$ | 16 % | $As_2O_3$ | 0,5%. |

5. Dispositif à buses multiples selon la revendication 4, caractérisé en ce qu'il contient des buses de verre, de composition selon la revendication 4, encastrées dans une masse de verre, résistant à l'égard des encres acides, de la composition selon les revendications 1 et 2.

FIG.1

FIG.2

**FIG.3**

**FIG.4**

**FIG.5**